# EUROPÄISCHE PATENTSCHRIFT

(11) **EP 4 399 555 B1**
(45) Veröffentlichungstag und Bekanntmachung des Hinweises auf die Patenterteilung: **28.10.2026**
(21) Anmeldenummer: 22772961.3
(22) Anmeldetag: 05.09.2022
(51) Int. Cl.: G02B 27/01

(54) **HEAD-UP-DISPLAY MIT SPIEGELVORRICHTUNG MIT SPEZIFISCHER LUFTBLASENREDUKTION IM SPIEGELBEREICH, SOWIE KRAFTFAHRZEUG**
HEAD-UP DISPLAY WITH MIRROR DEVICE WITH SPECIFIC AIR BUBBLE REDUCTION IN THE MIRROR REGION, AS WELL AS A MOTOR VEHICLE
AFFICHAGE TÊTE HAUTE AVEC DISPOSITIF DE MIROIR AVEC RÉDUCTION DE BULLES D'AIR SPÉCIFIQUE DANS LA RÉGION DE MIROIR, ET VÉHICULE À MOTEUR

(30) Priorität: 07.09.2021 DE 102021123115
(43) Veröffentlichungstag der Anmeldung: 17.07.2024
(73) Patentinhaber: Valeo Schalter und Sensoren GmbH, 74321 Bietigheim-Bissingen (DE)
(72) Erfinder: LE TOUMELIN, Loic, 74321 Bietigheim-Bissingen (DE)
(74) Vertreter: Ralf, Thorge
(86) Internationale Anmeldenummer: PCT/EP2022/074561
(87) Internationale Veröffentlichungsnummer: WO 2023/036724

(56) Entgegenhaltungen:
- JP-A- 2015 012 894
- US-A1- 2013 208 374
- US-A1- 2019 278 053
- US-A1- 2020 238 913

## Beschreibung

Ein Aspekt der Erfindung betrifft ein Head-up-Display mit einer Spiegelvorrichtung. Die Spiegelvorrichtung weist einen Spiegel auf. Der Spiegel weist eine Rückseite auf. Die Spiegelvorrichtung weist darüber hinaus ein Klebeelement auf. Dieses ist an der Rückseite des Spiegels angeordnet. Die Spiegelvorrichtung weist darüber hinaus einen Träger auf. Der Träger ist mit dem Klebeelement verbunden. Der Träger weist eine dem Klebeelement zugewandte Vorderseite auf. An dieser Vorderseite weist der Träger Öffnungen von Luftabführkanälen auf. Diese Luftabführkanäle sind in dem Träger ausgebildet. Ein weiterer Aspekt der Erfindung betrifft ein Kraftfahrzeug mit einem Head-up-Display.

Head-up-Displays in Kraftfahrzeugen weisen üblicherweise ein Gehäuse auf. Dieses kann aus mehreren Teilbereichen ausgebildet sein. Beispielsweise kann es in diesem Zusammenhang ein Deckelmodul und ein Bodenmodul aufweisen. Diese beiden Komponenten können zusammengefügt werden. Beispielsweise können hier Steckverbindungen oder Schnappverbindungen oder Schraubverbindungen und dergleichen vorgesehen sein. Das Deckelmodul weist diesbezüglich ein Außengehäuse auf. Ebenso kann das Bodenmodul ein Außengehäuse aufweisen. Diese beiden Teile in Form der Außengehäuse beziehungsweise der Schalen bilden dann auch das gesamte Gehäuse des Head-up-Displays. Sie sind diesbezüglich somit äußere Sichtbauteile des Head-up-Displays. Üblicherweise ist in einem Head-up-Display eine Bilderzeugungseinheit angeordnet. Diese erzeugt die Bilder, die mit dem Head-up-Display an eine dazu externe Projektionsfläche, wie beispielsweise eine Scheibe des Kraftfahrzeugs, projiziert werden können. Zusätzlich weist ein Head-up-Display im Inneren des Gehäuses zumindest einen Spiegel auf. Die von der Bilderzeugungseinheit erzeugten Lichtstrahlen werden von diesem Spiegel reflektiert. Bei Head-up-Displays kann jedoch auch der Verbau von zwei separaten Spiegeln in dem Inneren des Gehäuses vorgesehen sein. Dadurch wird eine mehrfache Umlenkung beziehungsweise eine mehrfache Reflexion der Lichtstrahlen, die von der Bilderzeugungseinheit erzeugt werden, durchgeführt. Dabei wird ein erster Spiegel, der im Strahlengang von der Bilderzeugungseinheit zu einem Austrittsfenster des Head-up-Displays näher zur Bilderzeugungseinheit angeordnet ist, auch als Faltspiegel bezeichnet. Mit dem diesbezüglich dem Strahlengang nachgeordneten zweiten Spiegel wird ein Umlenken der Lichtstrahlen insbesondere hin zu diesem Austrittsfenster des Head-Up-Displays durchgeführt. Um die Lichtumlenkung und auch somit die Lichtabstrahlung sehr präzise durchführen zu können und da somit auch die Bilddarstellung scharf erfolgen kann, ist die Anordnung der Spiegel, insbesondere eines diesbezüglich ersten Spiegels, in dem Gehäuse sehr exakt erforderlich.

US2019278053 offenbart ein Head-Up-Display mit einer Spiegeleinrichtung und einem Klebelement.

Bei Spiegelvorrichtungen für ein Head-up-Display, wie sie oben erläutert wurden, könner zwischen dem Spiegel und dem Klebeelement Lufteinschlüsse auftreten. Diese können die optischen Eigenschaften des Spiegels beeinträchtigen. Darüber hinaus kann die mechanisch stabile Befestigung beziehungsweise die Verbindung zwischen dem Klebeelement und dem Spiegel dadurch beeinträchtigt sein.

Es ist Aufgabe der vorliegenden Erfindung, eine Spiegelvorrichtung für ein Head-up-Display zu schaffen, bei welchem Lufteinschlüsse zwischen dem Spiegel und einem Klebeelement verbessert vermieden werden können. Des Weiteren ist es Aufgabe, ein Head-up-Display mit einer solchen Spiegelvorrichtung zu schaffen. Ebenso ist es Aufgabe, ein Kraftfahrzeug mit einem Head-up-Display zu schaffen.

Ein Aspekt der Erfindung betrifft eine Spiegelvorrichtung für ein Head-up-Display. Die Spiegelvorrichtung weist einen Spiegel auf. Der Spiegel weist eine Rückseite auf. Die Spiegelvorrichtung weist darüber hinaus ein Klebeelement auf. Dieses ist an der Rückseite des Spiegels angeordnet. Die Spiegelvorrichtung weist darüber hinaus einen Träger auf. Der Träger ist mit dem Klebeelement verbunden. Der Träger weist eine dem Klebeelement zugewandte Vorderseite auf. An dieser Vorderseite weist der Träger Öffnungen von Luftabführkanälen auf. Diese Luftabführkanäle sind in dem Träger ausgebildet.

Das Klebeelement weist zumindest ein Durchgangsloch auf. Ein Schnittstellenbereich zwischen der Rückseite des Spiegels und einer Vorderseite des Klebeelements ist durch dieses zumindest eine Durchgangslos im Klebeelement fluidleitend, insbesondere gasleitend, mit einem Luftabführkanal, der im Träger ausgebildet ist, verbunden. Durch derartig durchgängige Löcher in dem Klebeelement ist es somit ermöglicht, dass ein Lufteinschluss, der sich zwischen der Vorderseite des Klebeelements und der Rückseite des Spiegels bildet, aus diesem Schnittstellenbereich abgeführt werden kann. Denn durch das Durchgangsloch kann ein derartiger Lufteinschluss dann hinter das Klebeelement gelangen. Indem darüber hinaus dieses Durchgangsloch fluidleitend mit einem Luftabführkanal verbunden ist, ist es dadurch auch einfach ermöglicht, dass diese Luft nicht im Schnittstellenbereich zwischen dem Klebeelement und dem Träger verbleibt.

Vielmehr ist es dadurch auch sehr definiert und gerichtet möglich, diese Luft auch aus diesem Schnittstellenbereich zwischen der Rückseite des Klebeelements und der Vorderseite des Trägers abzuführen. Dadurch kann diese Luft auf diesem vorgegebenen gezielten Abführweg auch aus dem Träger herausgeführt werden. Ein besonders effizientes Konzept, um Lufteinschlüsse zwischen dem Klebeelement und dem Spiegel zu vermeiden oder zumindest effizient zu eliminieren, ist dadurch ermöglicht. Die Verbesserung der Spiegelvorrichtung im Hinblick auf ihre optischen Abbildungseigenschaften einerseits und insbesondere auch bezüglich der mechanisch verbesserten Verbindung zwischen dem Spiegel und dem Klebeelement andererseits ist dadurch ermöglicht.

In einem Ausführungsbeispiel ist das Klebeelement als ein doppelseitig klebendes Klebeband ausgebildet. Dies ist ein sehr vorteilhaftes Ausführungsbeispiel. Denn dadurch kann vermieden werden, dass Flüssigklebstoffe als Klebeelement verwendet werden. Ein derartiges doppelseitig klebendes Klebeband ist bereits vor seiner Montage als für sich hergestelltes Element vorhanden. Es ist bereits vor seiner Montage an dem Spiegel beziehungsweise zwischen dem Spiegel und dem Träger als formerhaltende Komponente vorhanden. Dies ist ein wesentlicher Vorteil bezüglich der Handhabung und Anbringung an den genannten Komponenten. Besonders vorteilhaft ist ein derartiges Ausführungsbeispiel dahingehend, dass definiert auch bereits vor der Montage Durchgangslöcher an dem Klebeelement erzeugt werden können. Ein Klebeelement ist daher bereits vor seiner Montage an dem Träger und/oder an der Rückseite des Spiegels mit zumindest einem derartigen Durchgangsloch ausgebildet. Ein doppelseitig klebendes Klebeband ermöglicht es darüber hinaus auch, die Größe eines Durchgangslochs und/oder die Position eines Durchgangslochs an diesem Klebeelement sehr exakt zu erzeugen. Dies hat dann auch wiederum Vorteile, um beim Verbau die fluidleitende Verbindung des Durchgangslochs mit zumindest einem Luftabführkanal zu erzeugen. Darüber hinaus ist ein derartig doppelseitig klebendes Klebeband auch bezüglich der Montage vorteilhaft. Denn es ist eine sehr schnelle und ortsgenaue Montage ermöglicht. Darüber hinaus ist eine stabile mechanische Verbindung mit den direkt dann anschließenden Komponenten, insbesondere der Rückseite des Spiegels und der Vorderseite des Trägers ermöglicht. Eine dauerhaft stabile Verbindung ist dadurch auch erreicht.

In einem Ausführungsbeispiel ist zumindest ein Luftabführkanal über zumindest 50 Prozent, insbesondere zumindest 75 Prozent, insbesondere zumindest 90 Prozent, seiner Länge, die entlang seiner Längsachse bemessen ist, auf der Vorderseite des Trägers offen ausgebildet. Somit ist ein Luftabführkanal auf seiner der Rückseite des Klebeelements zugewandten Seite linienförmig geöffnet. Dadurch ist das Luftabführkonzept nochmals verbessert. Denn insbesondere ist ein Durchgangsloch in seiner Lochweite größer als insbesondere nur ein Eingang eines derartigen Luftabführkanals. Senkrecht zu seiner Längsachse weist der Luftabführkanal diesbezüglich einen Querschnitt auf. An seinem Anfang ist diesbezüglich der Eingang des Luftabführkanals definiert. Dieser Querschnitt ist kleiner als die Größe des Durchgangslochs. Daher würde sich dann, wenn nur der Eingang eines Luftabführkanals an der Vorderseite des Trägers freiliegt, eine fluidleitende Engstelle ergeben. Die Luftabführung wäre daher an dieser Stelle gegebenenfalls eingeschränkt. Indem jedoch durch das vorteilhafte Ausführungsbeispiel der Luftabführkanal entlang seiner Längsachse betrachtet über diese größere Länge geöffnet ist, ist somit auch diejenige Fläche vergrößert, über welche vom Durchgangsloch her kommend Luft in diesen Luftabführkanal eindringen kann. Damit ist das Luftabführkonzept nochmals verbessert. Denn auch an der Schnittstelle zwischen dem Durchgangsloch und dem Luftabführkanal ist somit quasi keine Engstelle gebildet und ein größeres Luftvolumen kann unverzüglich in den Luftabführkanal gelangen und dort abgeführt werden.

In einem Ausführungsbeispiel ist der zumindest eine Luftabführkanal als eine Rinne ausgebildet. Diese ist an der Vorderseite des Trägers vorzugsweise über ihre gesamte Länge offen ausgebildet. Die oben genannten Vorteile sind dadurch nochmals unterstützt. Sehr vorteilhaft ist dieses wie auch das direkt darüber genannte Ausführungsbeispiel auch bezüglich der Fertigung des Trägers. Denn indem diese Luftabführkanäle zur Vorderseite hin offen sind, können sie auch einfach hergestellt werden. Beispielsweise kann der Träger in dem Zusammenhang aus Kunststoff ausgebildet werden. Er kann beispielsweise als Spritzgussbauteil realisiert sein. Die Luftabführkanäle müssen bei diesen oben genannten Ausführungsbeispielen daher nicht vollständig innenliegend im Träger erzeugt werden. Die oberflächennahe Erzeugung dieser Luftabführkanäle mit ihren entlang ihrer Längsachse vorgesehenen Öffnungen zur Vorderseite des Trägers hin ist somit auch einfacher herzustellen.

Bei frontseitiger Betrachtung des Trägers und somit bei Blick auf die Vorderseite sind bei diesem Ausführungsbeispiel der zumindest eine Luftabführkanal, insbesondere mehrere Luftabführkanäle, als Nute beziehungsweise Rinnen ausgebildet.

In einem Ausführungsbeispiel sind zumindest zwei Luftabführkanäle beabstandet und parallel zueinander orientiert. Damit kann an mehreren Stellen der Vorderseite eine Luftabführung erfolgen. Auch ein gleichzeitiges Abführen von gegebenenfalls eingeschlossener Luft über mehrere separate Luftabführkanäle ist dann ermöglicht. Darüber hinaus bietet dieses Ausführungsbeispiel auch die Möglichkeit, dass an unterschiedlichen lokalen Stellen der Vorderseite des Trägers Luftabführkanäle vorhanden sind. Lokal eingeschlossene Luft an der Schnittstelle zwischen dem Klebeelement und dem Spiegel kann dann ortsnäher zu einem benachbarten Luftabführkanal über ein Durchgangsloch gebracht werden. Damit muss gegebenenfalls an dieser Schnittstelle zwischen dem Klebeelement und dem Spiegel lokal eingeschlossene Luft nicht über eine relativ lange Strecke zwischen dem Klebeelement und dem Spiegel bewegt werden, um diesbezüglich zu einem entfernten Luftabführkanal gelangen zu können.

In einem Ausführungsbeispiel sind zumindest zwei Luftabführkanäle in Querrichtung des Trägers verlaufend ausgebildet. In einem Ausführungsbeispiel sind zumindest zwei Luftabführkanäle in Hochrichtung des Trägers verlaufend angeordnet. In dem Zusammenhang ist in einem Ausführungsbeispiel die Vorderseite des Trägers als eckige, insbesondere viereckige, Fläche gebildet. Diese Fläche ist vorzugsweise gewölbt, insbesondere konkav. Eine derartige viereckige Fläche ist somit durch vier Seitenränder begrenzt. Jeweils zwei gegenüberliegende Seitenränder sind in dem Zusammenhang in Querrichtung einerseits beziehungsweise in Hochrichtung andererseits beabstandet. Dies bedeutet auch, dass zumindest zwei Luftabführkanäle sich in dieser einen Querrichtung zwischen zwei gegenüberliegenden Randkanten des Trägers, insbesondere der Fläche der Vorderseite, erstrecken. Die zumindest zwei anderen Luftabführkanäle erstrecken sich diesbezüglich zwischen den zwei anderen gegenüberliegenden Rändern der Vorderseite des Trägers, wobei hier dann die Erstreckungsrichtung die Hochrichtung ist.

Insbesondere sind die Luftabführkanäle unterbrechungsfrei über ihre entsprechende Längserstreckung ausgebildet.

Durch ein derartiges Luftabführkanalmuster mit zumindest zwei Luftabführkanälen in eine Richtungserstreckung und zumindest zwei Luftabführkanälen in eine andere Erstreckungsrichtung lässt sich das Abführen von lokal eingeschlossener Luft zwischen einem Klebeelement und dem Spiegel verbessert auch lokal erreichen. Darüber hinaus ist das Luftabführkonzept auch entsprechend verbessert, da auch größere Luftmengen schneller abgeführt werden können. Diese Luftmengen können sich in den mehreren Luftabführkanälen gleichzeitig verteilen und können dann auch gleichzeitig abgeführt werden.

In einem Ausführungsbeispiel kreuzen sich zumindest ein erster Luftabführkanal und zumindest ein dazu unterschiedlicher zweiter Luftabführkanal an einer Kanalkreuzung. Diese beiden in unterschiedliche Richtungen orientierten Luftabführkanäle sind somit insbesondere zumindest an dieser Kanalkreuzung fluidleitend gekoppelt. An dieser Kanalkreuzung gehen die Luftabführkanäle ineinander über. Durch eine derartige Schnittstelle in Form der Kanalkreuzung ist es auch besonders vorteilhaft möglich, Luft in die Luftabführkanäle einzubringen und möglichst umfänglich gleichzeitig auf mehrere Luftabführkanäle zu verteilen.

In einem Ausführungsbeispiel ist zumindest ein Durchgangsloch, welches in dem Klebeelement ausgebildet ist, im Bereich der zumindest einen Kanalkreuzung angeordnet, sodass die Kanalkreuzung zur Rückseite des Spiegels hin frei liegt. Diese Ortspositionierung zwischen dem Durchgangsloch einerseits und einer derartigen Kanalkreuzung andererseits ermöglicht in besonders vorteilhafter Weise das Verbringen von eingeschlossener Luft zwischen dem Klebeelement und der Rückseite des Spiegels durch ein Durchgangsloch hindurch und dort dann auf kürzestem Weg unverzüglich in die Kanalkreuzung hinein. Ein besonders effizientes und kurzwegiges Luftabführkonzept ist dadurch erreicht.

In einem Ausführungsbeispiel sind mehrere Luftabführkanäle in einem matrixartigen Kanalanordnungsmuster angeordnet. Durch eine derartige matrixartige Anordnung sind die oben genannten Vorteile in besonderem Maße unterstützt. Das lokal gezielte und schnelle Abführen von eingeschlossener Luft zwischen dem Klebeelement und der Rückseite des Spiegels einerseits sowie auch ein besonders vorteilhaftes gleichzeitige Abführen von eingeschlossener Luft über mehrere Luftabführkanäle, auch in unterschiedliche Abführrichtungen, ist dadurch unterstützt.

Eine matrixartige Kanalanordnung beziehungsweise ein entsprechendes Kanalanordnungsmuster kann mehrere, geradlinige und parallel zueinander orientierte erste Luftabführkanäle aufweisen und mehrere, geradlinige und parallel zueinander orientierte weitere Luftabführkanäle aufweisen, die insbesondere in einem Winkel von 90° zu den anderen Luftabführkanälen orientiert sind. Damit wird ein matrixartiges Kanalanordnungsmuster erzeugt, bei welchem mehrere Luftabführkanäle quasi senkrecht zueinander stehend ausgebildet sind.

In einem Ausführungsbeispiel ist ein an einem Ende eines Luftabführkanals ausgebildeter Ausgang eines solchen Luftabführkanals an einem Rand beziehungsweise einer Randkante des Trägers ausgebildet, sodass abgeführte Luft seitlich zur Vorderseite des Trägers aus dem Träger austritt. Auch dies ist ein sehr vorteilhaftes Ausführungsbeispiel, denn somit erfolgt das Luftführungskonzept dahingehend, dass dann, wenn Luft einmal in den Luftabführkanal gelangt ist, nicht mehr in den Schnittstellenbereich zwischen dem Klebeelement und dem Spiegel rückgeführt wird beziehungsweise nicht mehr dorthin gelangen kann. Gerade dieses randseitige seitliche Abführen ermöglicht auch ein schnelles und umfängliches Austreten der Luft aus den Luftabführkanälen. Da gerade im Umgebungsbereich dieses Rands des Trägers üblicherweise ein größerer Luftraum in einem Head-up-Display vorliegt, wird der Luftaustritt genau an dieser Stelle auch nicht unerwünscht beeinträchtigt oder es tritt ein entsprechender Stau des Luftaustritts auf. All dies kann entsprechend vermieden werden. Darüber hinaus ist durch diese Luftaustrittsstelle auch vermieden, dass die austretende Luft vor den Spiegel der Spiegelvorrichtung gelangen könnte und somit die optische Abbildungseigenschaft beeinträchtigen könnte, wenn sich dort gegebenenfalls unerwünschte Verwirbelungen der austretenden Luft ergeben würden. Da somit dieser Luftaustritt aus den Luftabführkanälen hinter dem Spiegel der Spiegelvorrichtung vollzogen wird, können derartige gegebenenfalls auftretende Nachteile vermieden werden.

In einem Ausführungsbeispiel bedeckt die Fläche des Klebeelements zumindest 70 Prozent, insbesondere zumindest 80 Prozent, der Fläche der Vorderseite des Trägers. Damit sind die vorzugsweise zur Vorderseite des Trägers hin offenen Luftabführkanäle durch das Klebeelement auch umfänglich abgedeckt.

Es kann in einem Ausführungsbeispiel vorgesehen sein, dass ein flächiger Randstreifen der Vorderseite des Trägers von dem Klebeelement unbedeckt ist. In diesem Randstreifen kann in einem Ausführungsbeispiel zumindest ein Luftabführkanal an der Vorderseite offen sein. Somit ist es dann auch zusätzlich möglich, dass über diesen Seitenbereich des Luftabführkanals Luft abgeführt werden kann. Diese wird dann in den Zwischenraum zwischen der Vorderseite des Trägers und der Rückseite des Spiegels abgeführt. Dies kann zusätzlich zu dem oben genannten Ausführungsbeispiel erfolgen, indem ein entsprechendes Abführen von in einem Luftkanal geführter Luft nur über eine Randseite des Trägers erfolgt.

In einem Ausführungsbeispiel weist das Klebeelement mehrere separate Durchgangslöcher auf. Ein Durchgangsloch kann bezüglich seiner Geometrie einen eckenfreien Konturenrand aufweisen. Möglich sind jedoch auch andere Geometrien.

Diesbezüglich kann ein Durchgangsloch kreisrund oder oval oder dergleichen sein. Auch eckige Konturenränder sind möglich, um die Geometrie eines Durchgangslochs zu definieren.

Das Head-up-Display ist insbesondere ein Windschutzscheiben-Head-up-Display. Dies bedeutet, dass das von dem Head-up-Display ausgekoppelte Licht auf eine Windschutzscheibe projiziert wird. Das Head-up-Display weist in einem Ausführungsbeispiel ein Gehäuse auf, in dem die Spiegelvorrichtung angeordnet ist. In diesem Gehäuse kann auch eine Bilderzeugungseinheit des Head-up-Displays angeordnet sein.

Das Head-up-Display kann nur eine einzige Spiegelvorrichtung aufweisen. In einem Ausführungsbeispiel ist es auch möglich, dass ein Head-up-Display eine erste Spiegelvorrichtung und eine dazu separate zweite Spiegelvorrichtung aufweist. Bei diesem Konzept wird das Licht der Bilderzeugungseinheit entlang des Strahlengangs betrachtet zunächst auf die erste Spiegelvorrichtung projiziert und über diese erste Spiegelvorrichtung zu der im Strahlengang nachfolgenden zweiten Spiegelvorrichtung reflektiert. Von der zweiten Spiegelvorrichtung wird dann das Licht in Richtung eines Austrittsfensters des Head-up-Displays reflektiert und aus diesem Austrittsfenster aus dem Head-up-Display heraus abgestrahlt, insbesondere direkt auf eine Innenseite einer Windschutzscheibe eines Kraftfahrzeugs.

Ein weiterer Aspekt der Erfindung betrifft ein Kraftfahrzeug mit einem Head-up-Display gemäß dem oben genannten Aspekt oder einem vorteilhaften Ausführungsbeispiel davon.

Ausführungsbeispiele der Erfindung werden nachfolgend anhand schematischer Zeichnungen näher erläutert. Es zeigen:
- Fig. 1: eine schematische Darstellung eines Ausführungsbeispiels eines erfindungsgemäßen Head-up-Displays;
- Fig. 2: eine schematische Darstellung eines Ausführungsbeispiels eines erfindungsgemäßen Kraftfahrzeugs;
- Fig. 3: eine perspektivische Darstellung eines Beispiels einer Spiegelvorrichtung für ein erfindungsgemäßes Head-up-Display;
- Fig. 4: eine perspektivische Darstellung eines Beispiels eines Trägers der Spiegelvorrichtung gemäß Fig. 3;
- Fig. 5: eine perspektivische Darstellung eines Trägers mit einem an einer Vorderseite des Trägers aufgebrachten Klebeelement der Spiegelvorrichtung gemäß Fig. 3; und
- Fig. 6: eine vereinfachte Schnittdarstellung durch die Spiegelvorrichtung gemäß Fig. 3.

In den Figuren werden gleiche oder funktionsgleiche Elemente mit den gleichen Bezugszeichen versehen.

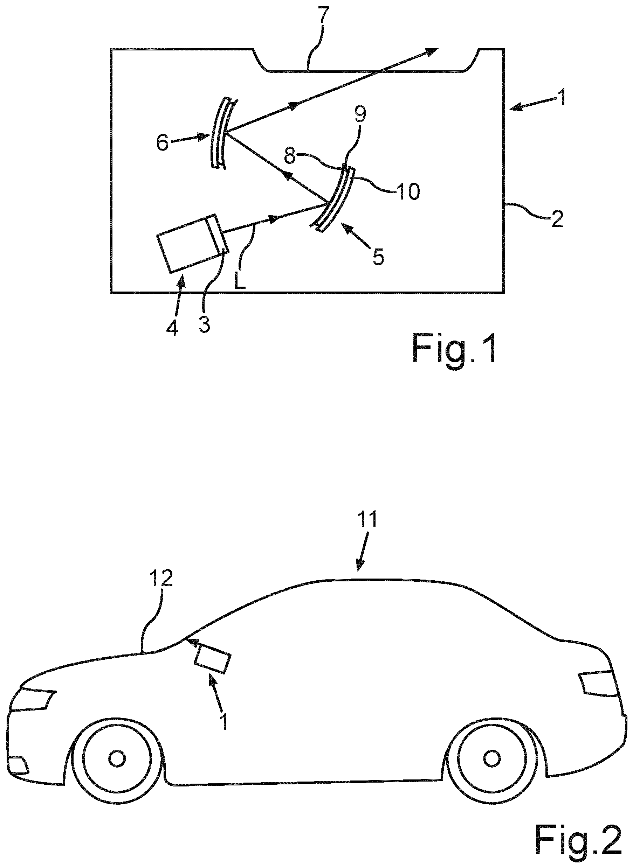

In Fig. 1 ist in einer schematischen Darstellung ein Ausführungsbeispiel eines Head-up-Displays 1 gezeigt. Das Head-up-Display 1 ist bestimmungsgemäß zum Verbau in einem Kraftfahrzeug vorgesehen. Das Head-up-Display 1 ist hier ein Windschutzscheiben-Head-up-Display.

Das Head-up-Display 1 weist ein Gehäuse 2 auf. In dem Gehäuse 2 ist in schematischer Darstellung zumindest eine Bilderzeugungseinheit 4, insbesondere mit einem Display 3, angeordnet. Darüber hinaus weist das Head-up-Display 1 eine Spiegelvorrichtung 5 auf. In einem Ausführungsbeispiel kann das Head-up-Display 1 nur die eine Spiegelvorrichtung 5 aufweisen. In einem anderen, hier in Fig. 1 gezeigten Ausführungsbeispiel kann das Head-up-Display 1 eine weitere Spiegelvorrichtung 6 aufweisen. Die eine, auch erste Spiegelvorrichtung 5 genannte Spiegelvorrichtung ist im Strahlengang des Lichts L, welches von der Bilderzeugungseinheit 4 abgestrahlt wird, vor der weiteren, als zweite Spiegelvorrichtung 6 bezeichneten Spiegelvorrichtung angeordnet. Das Licht L der Bilderzeugungseinheit 4 wird von der ersten Spiegelvorrichtung 5 zur zweiten Spiegelvorrichtung 6 reflektiert. Das Licht L wird dann von der zweiten Spiegelvorrichtung 6 zu einem Austrittsfenster 7 reflektiert und tritt dort aus dem Gehäuse 2 aus.

Eine Spiegelvorrichtung eines Head-up-Displays 1 weist in einem Ausführungsbeispiel einen Spiegel, ein Klebeelement und einen Träger auf. Diese Bestandteile können bei der ersten Spiegelvorrichtung 5 vorgesehen sein. Sie können zusätzlich oder anstatt dazu auch bei der zweiten Spiegelvorrichtung 6 vorgesehen sein.

Die erste Spiegelvorrichtung 5 weist einen Spiegel 8, ein Klebeelement 9 und einen Träger 10 auf. Der Spiegel 8 ist ein Reflexionselement.

In Fig. 2 ist in einer schematischen Darstellung ein Ausführungsbeispiel eines Kraftfahrzeugs 11 gezeigt. Das Kraftfahrzeug 11 kann beispielsweise ein Personenkraftwagen sein. Es kann jedoch auch ein Lastkraftwagen sein. Das Kraftfahrzeug 11 weist ein Head-up-Display 1 auf. Dieses ist gemäß einem Ausführungsbeispiel, wie es zu Fig. 1 erläutert wurde, ausgebildet. Das Licht L, welches aus dem Austrittsfenster 7 austritt, wird an eine Windschutzscheibe 12 des Kraftfahrzeugs 1 projiziert.

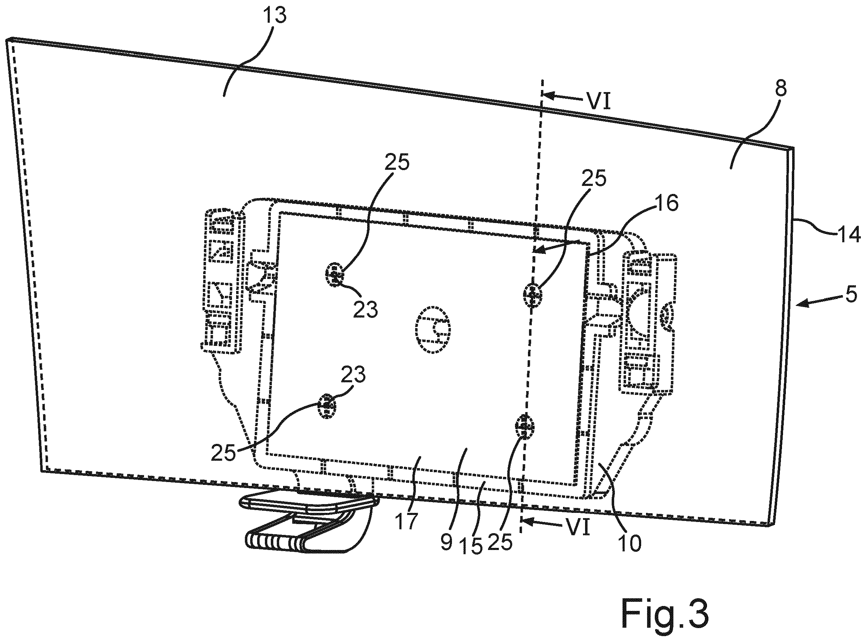

In Fig. 3 ist in einem Ausführungsbeispiel eine Spiegelvorrichtung gezeigt. Diese ist hier beispielhaft die Spiegelvorrichtung 5. Sie weist den bereits angesprochenen Spiegel 8 auf. Der Spiegel 8 ist gewölbt. Er ist insbesondere ein Konkavspiegel. Dies bedeutet, dass eine reflektierende Vorderseite 13 konkav gewölbt ist. Auf die Vorderseite 13 trifft das Licht L auf und wird entsprechend reflektiert. Darüber hinaus weist der Spiegel 8 eine Rückseite 14 auf. Des Weiteren ist hier auch das Klebeelement 9 zu erkennen. Dieses ist im Ausführungsbeispiel direkt an die Rückseite 14 angebracht, insbesondere angeklebt. Das Klebeelement 9 ist in einem Ausführungsbeispiel ein doppelseitig klebendes Klebeband. Darüber hinaus ist in Fig. 3 auch der Träger 10 zu erkennen. Der Träger 10 kann in einem Ausführungsbeispiel aus Kunststoff ausgebildet sein. Er ist vorzugsweise einstückig ausgebildet. Beispielsweise kann er als Spritzgussbauteil realisiert sein. Wie in Fig. 3 bereits zu erkennen ist, ist das Klebeelement 9 zwischen dem Spiegel 8 und dem Träger 10 angeordnet. In dem Zusammenhang ist eine Vorderseite 15 des Trägers 10 direkt an einer Rückseite 16 des Klebeelements 9 angeordnet. Eine Vorderseite 17 des Klebeelements 9 ist direkt an der Rückseite 14 angeordnet.

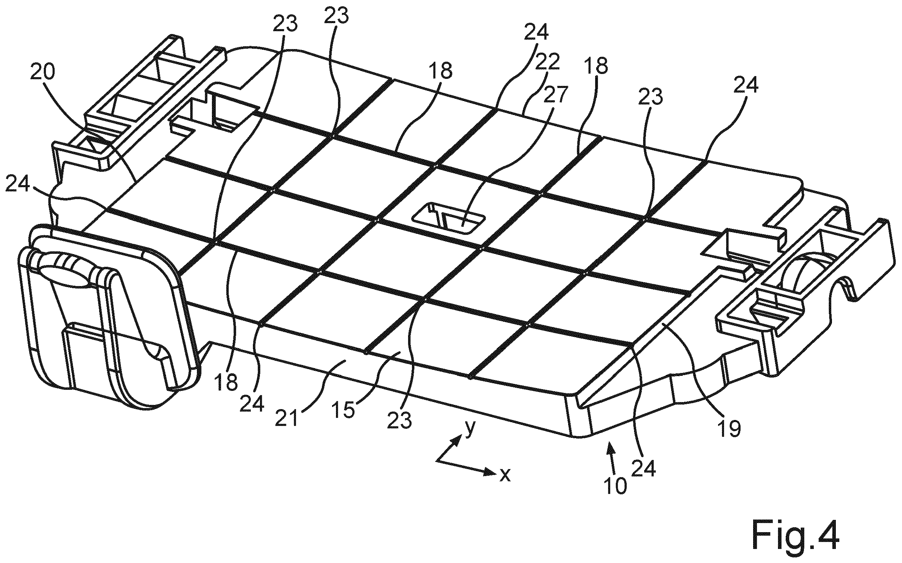

Wie in Fig. 4 zu erkennen ist, in welcher der Träger 10 in perspektivischer Darstellung gezeigt ist, weist der Träger 10 zumindest einen Luftabführkanal auf. Vorzugsweise sind hier mehrere Luftabführkanäle 18 ausgebildet, von denen nur einige mit dem entsprechenden Bezugszeichen versehen sind, um die Übersichtlichkeit zu wahren. Im Ausführungsbeispiel sind die Luftabführkanäle 18 zur Vorderseite 15 hin offen. Insbesondere sind die Luftabführkanäle 18 jeweils über ihre gesamte Länge zur Vorderseite 15 hin offen. Dadurch sind die Luftabführkanäle 18 hier rinnenartig beziehungsweise nutartig ausgebildet. Wie zu erkennen ist, sind hier mehrere separate Luftabführkanäle 18 integral in dem Träger 10 ausgebildet. In dem Zusammenhang sind mehrere Luftabführkanäle 18 jeweils parallel zueinander orientiert. In einem Ausführungsbeispiel sind zumindest zwei Luftabführkanäle 18 in einer Querrichtung (x-Richtung) des Trägers 10 verlaufend ausgebildet. Sie erstrecken sich diesbezüglich durchgehend und unterbrechungsfrei von einem ersten Rand 19 zu einem in dieser Querrichtung gegenüberliegenden weiteren Rand 20. In einem Ausführungsbeispiel sind weitere, insbesondere zumindest zwei, Luftabführkanäle 18 in einer weiteren Raumrichtung, hier der Hochrichtung (y-Richtung), des Trägers 10 verlaufend angeordnet. Sie erstrecken sich in dem Zusammenhang ebenfalls unterbrechungsfrei in dieser Hochrichtung. Sie erstrecken sich diesbezüglich zwischen weiteren Rändern 21 und 22 des Trägers 10, insbesondere der Vorderseite 15.

Im Ausführungsbeispiel sind die mehreren Luftabführkanäle 18 in einem matrixartigen Kanalanordnungsmuster angeordnet. Die Luftabführkanäle 18 sind hier in einem Winkel von 90° zueinander orientiert.

Darüber hinaus sind zumindest einige Luftabführkanäle 18 so ausgebildet, dass sie sich mit zumindest einem weiteren Luftabführkanal 18 kreuzen. Dadurch entstehen Kanalkreuzungen 23. Auch hier sind der Übersichtlichkeit dienend lediglich einige dieser Kanalkreuzungen 23 mit dem entsprechenden Bezugszeichen versehen.

Auch die Kanalkreuzungen 23 sind an der Vorderseite 15 offen.

Wie darüber hinaus zu erkennen ist, weisen die Luftabführkanäle 18 entlang ihrer Längsachse betrachtet jeweils endseitig Ausgänge auf. In Fig. 4 sind auch hier wiederum der Übersichtlichkeit dienend lediglich einige dieser Ausgänge 24 mit dem entsprechenden Bezugszeichen versehen. Die Ausgänge 24 sind in dem gezeigten Ausführungsbeispiel an den Rändern 19, 20, 21 und 22 gebildet. Dadurch kann Luft, die in einem Luftabführkanal 18 abgeführt wird, über diese Ausgänge 24 seitlich aus dem Träger 10 abgeführt werden.

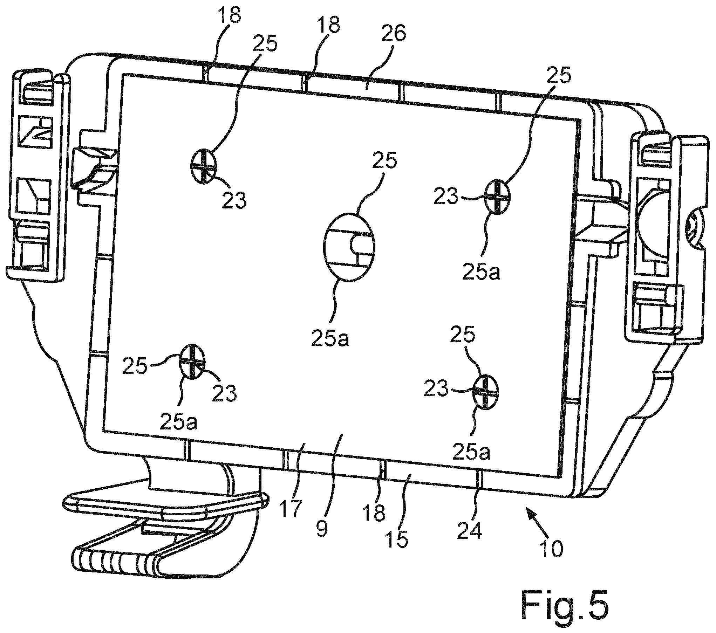

In Fig. 5 ist in einer perspektivischen Darstellung der Träger 10 gemäß Fig. 4 gezeigt. Darüber hinaus ist das flächige Klebeelement 9 an der Vorderseite 15 angebracht, insbesondere angeklebt. Wie in Fig. 5 zu erkennen ist und auch bereits in Fig. 3 dargestellt ist, weist das Klebeelement 9 zumindest ein Durchgangsloch 25 auf. Insbesondere sind es im Ausführungsbeispiel mehrere separate und beabstandet zueinander ausgebildete Durchgangslöcher 25. Das Klebeelement 9 bedeckt im Ausführungsbeispiel die Fläche der Vorderseite 15 zumindest zu 50 Prozent, insbesondere zumindest zu 60 Prozent, insbesondere zumindest zu 70 Prozent, insbesondere zumindest zu 80 Prozent. Im Ausführungsbeispiel ist die Positionierung des Klebeelements 9 derart, dass ein umlaufender Randstreifen 26 der Vorderseite 15 von dem Klebeelement 9 unbedeckt ist. Im Ausführungsbeispiel ist vorgesehen, dass in diesem Randstreifen 26 zumindest einige der Luftabführkanäle 18 zur Vorderseite 15 hin offen sind. Dadurch kann auch ein Luftaustritt nicht nur über die Ausgänge 24, sondern auch über diese Teilabschnitte der Luftabführkanäle 18 nach vorne hin und somit insbesondere zur Rückseite 14 des Spiegels 8 hin erfolgen.

Wie in Fig. 5 zu erkennen ist, sind die Durchgangslöcher 25 so positioniert, dass sie bei einer Projektionsbetrachtung an den Flächenbereichen ausgebildet sind beziehungsweise angeordnet sind, an denen Kanalkreuzungen 23 vorhanden sind.

Möglich ist es auch, dass der Träger 10 ein Loch 27 aufweist, wie dies in Fig. 4 gezeigt ist. Dieses Loch 27 ist durchgängig ausgebildet. Es kann in einem Ausführungsbeispiel vorgesehen sein, dass insbesondere ein mittiges Durchgangsloch 25 im Flächenbereich dieses Lochs 27 angeordnet ist. Dadurch kann auch Luft durch das Durchgangsloch 25 direkt in dieses Loch 27 abströmen.

Ist nun Luft in dem Schnittstellenbereich zwischen der Vorderseite 17 des Klebeelements 9 und der Rückseite 14 des Spiegels 8 angeordnet, insbesondere beispielsweise als Luftblase eingeschlossen, kann diese eingeschlossene Luft einfach aus diesem Schnittstellenbereich abgeführt werden. So ist es in dem Zusammenhang ermöglicht, dass diese eingeschlossene Luft zu einem Durchgangsloch 25 gelangt und von dort dann direkt, da die Kanalkreuzung 23 zur Rückseite 14 hin freiliegend ist, in zumindest einen Luftabführkanal 18 abgeführt werden.

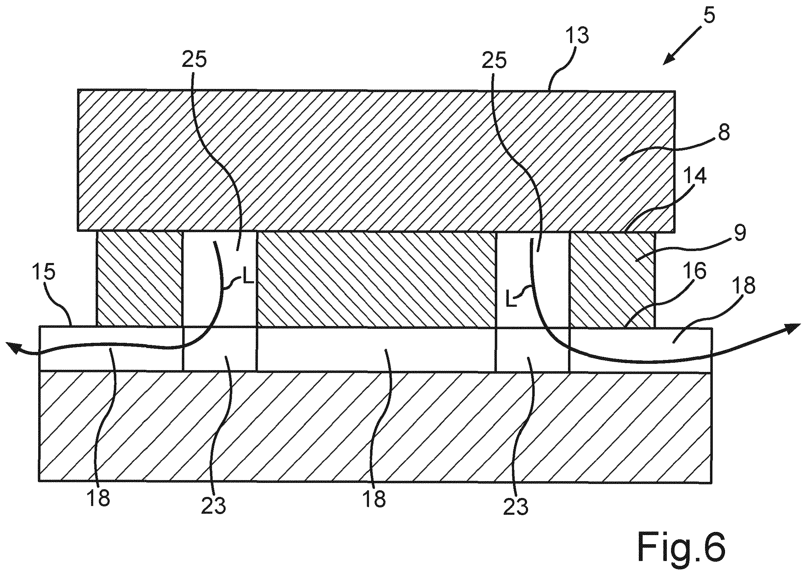

Über diesen zumindest einen Luftabführkanal 18 wird dann die Luft abgeleitet und somit insbesondere aus dem Träger 10 herausgeleitet. In dem Zusammenhang ist in Fig. 6 eine vereinfachte Schnittdarstellung der Spiegelvorrichtung 5 entlang der Schnittlinie VI-VI in Fig. 3 gezeigt.

Der Strömungsweg der Luft L ist beispielhaft dargestellt.

## Patentansprüche

1. Head-up-Display (1) mit einer Spiegelvorrichtung (5, 6), mit einem Spiegel (8) und mit einem an einer Rückseite (14) des Spiegels (8) angeordneten Klebeelement (9), und mit einem Träger (10), der mit dem Klebeelement (9) verbunden ist, wobei der Träger (10) eine dem Klebeelement (9) zugewandten Vorderseite (15) aufweist, in welcher Öffnungen von Luftabführkanälen (18) angeordnet sind, wobei die Luftabführkanäle (18) die in dem Träger (10) ausgebildet sind,
**dadurch gekennzeichnet, dass**
das Klebeelement (9) zumindest ein Durchgangsloch (25) aufweist, mit welchem ein Schnittstellenbereich zwischen der Rückseite (14) des Spiegels (8) und einer Vorderseite (17) des Klebeelements (9) fluidleitend mit einem Luftabführkanal (18) verbunden ist.

2. Head-up-Display (1) nach Anspruch 1,
**dadurch gekennzeichnet, dass**
das Klebeelement (9) ein doppelseitig klebendes Klebeband ist.

3. Head-up-Display (1) nach Anspruch 1 oder 2,
**dadurch gekennzeichnet, dass**
zumindest ein Luftabführkanal (18) über zumindest 50%, insbesondere zumindest 75%, insbesondere zumindest 90%, seiner Länge auf der Vorderseite (15) des Trägers (10) offen ausgebildet ist.

4. Head-up-Display (1)nach Anspruch 3,
**dadurch gekennzeichnet, dass**
der zumindest eine Luftabführkanal (18) als eine Rinne ausgebildet ist, die an der Vorderseite (15) des Trägers (10) über ihre gesamte Länge offen ist.

5. Head-up-Display (1) nach einem der vorhergehenden Ansprüche,
**dadurch gekennzeichnet, dass**
zumindest zwei Luftabführkanäle (18) parallel zueinander orientiert sind.

6. Head-up-Display (1) nach einem der vorhergehenden Ansprüche,
**dadurch gekennzeichnet, dass**
zumindest zwei Luftabführkanäle (18) in Querrichtung (x) des Trägers (10) verlaufend ausgebildet sind und zumindest zwei Luftabführkanäle (18) in Hochrichtung (y) des Trägers (10) verlaufend angeordnet sind.

7. Head-up-Display (1)) nach einem der vorhergehenden Ansprüche,
**dadurch gekennzeichnet, dass**
sich zumindest ein erster Luftabführkanal (18) und zumindest ein zweiter Luftabführkanal (18) an einer Kanalkreuzung (23) kreuzen und fluidleitend gekoppelt sind.

8. Head-up-Display (1) nach Anspruch 7,
**dadurch gekennzeichnet, dass**
das Durchgangsloch (25) im Bereich der Kanalkreuzung (23) angeordnet ist, so dass die Kanalkreuzung (23) zur Rückseite (14) des Spiegels (8) hin frei liegt.

9. Head-up-Display (1) nach einem der vorhergehenden Ansprüche,
**dadurch gekennzeichnet, dass**
mehrere Luftabführkanäle (18) in einem matrixartigen Kanalanordnungsmuster angeordnet sind.

10. Head-up-Display (1) nach einem der vorhergehenden Ansprüche,
**dadurch gekennzeichnet, dass**
ein an einem Ende eines Luftabführkanals (18) ausgebildeter Ausgang (24) eines Luftabführkanals (18) an einem Rand (19, 20, 21, 22) des Trägers (10) ausgebildet ist, so dass abgeführte Luft (L) seitlich zur Vorderseite (15) des Trägers (10) aus dem Träger (10) austritt.

11. Head-up-Display (1) nach einem der vorhergehenden Ansprüche,
**dadurch gekennzeichnet, dass** die Fläche des Klebeelements (9) zumindest 70%, insbesondere zumindest 80%, der Fläche der Vorderseite (15) beträgt, insbesondere bedeckt.

12. Head-up-Display (1) nach Anspruch 11,
**dadurch gekennzeichnet, dass**
ein Randstreifen (26) der Vorderseite (15) des Trägers (10) von dem Klebeelement (9) unbedeckt ist und in dem Randstreifen (26) zumindest ein Luftabführkanal (18) an der Vorderseite (15) offen ist.

13. Head-up-Display (1) nach einem der vorhergehenden Ansprüche,
**dadurch gekennzeichnet, dass**
das Klebeelement (9) mehrere separate Durchgangslöcher (25), insbesondere mit eckenfreien Konturenrand (25a), aufweist.

14. Kraftfahrzeug (11) mit einem Head-up-Display (1) nach einem der vorhergehenden Ansprüche.

## Claims

1. Head-up display (1) with a mirror device (5, 6), with a mirror (8) and with an adhesive element (9) arranged on a rear side (14) of the mirror (8), and with a carrier (10) that is connected to the adhesive element (9), wherein the carrier (10) has a front side (15) facing the adhesive element (9), in which openings of air discharge channels (18) are arranged, wherein the air discharge channels (18) are formed in the carrier (10), **characterized in that** the adhesive element (9) has at least one through-hole (25), with which an interface region between the rear side (14) of the mirror (8) and a front side (17) of the adhesive element (9) is connected in a fluid-conducting manner to an air discharge channel (18).

2. Head-up display (1) according to claim 1, **characterized in that** the adhesive element (9) is a double-sided adhesive tape.

3. Head-up display (1) according to claim 1 or 2, **characterized in that** at least one air discharge channel (18) is formed open on the front side (15) of the carrier (10) over at least 50%, in particular at least 75%, in particular at least 90%, of its length.

4. Head-up display (1) according to claim 3, **characterized in that** the at least one air discharge channel (18) is formed as a groove that is open over its entire length on the front side (15) of the carrier (10).

5. Head-up display (1) according to one of the preceding claims, **characterized in that** at least two air discharge channels (18) are oriented parallel to one another.

6. Head-up display (1) according to one of the preceding claims, **characterized in that** at least two air discharge channels (18) are formed extending in the transverse direction (x) of the carrier (10) and at least two air discharge channels (18) are arranged extending in the vertical direction (y) of the carrier (10).

7. Head-up display (1) according to one of the preceding claims, **characterized in that** at least one first air discharge channel (18) and at least one second air discharge channel (18) intersect at a channel intersection (23) and are coupled in a fluid-conducting manner.

8. Head-up display (1) according to claim 7, **characterized in that** the through-hole (25) is arranged in the region of the channel intersection (23), so that the channel intersection (23) is exposed towards the rear side (14) of the mirror (8).

9. Head-up display (1) according to one of the preceding claims, **characterized in that** a plurality of air discharge channels (18) are arranged in a matrix-like channel arrangement pattern.

10. Head-up display (1) according to one of the preceding claims, **characterized in that** an outlet (24) of an air discharge channel (18) formed at one end of an air discharge channel (18) is formed at an edge (19, 20, 21, 22) of the carrier (10), so that discharged air (L) exits the carrier (10) laterally to the front side (15) of the carrier (10).

11. Head-up display (1) according to one of the preceding claims, **characterized in that** the area of the adhesive element (9) amounts to at least 70%, in particular at least 80%, of the area of the front side (15), in particular covers it.

12. Head-up display (1) according to claim 11, **characterized in that** a marginal strip (26) of the front side (15) of the carrier (10) is uncovered by the adhesive element (9) and in the marginal strip (26) at least one air discharge channel (18) is open on the front side (15).

13. Head-up display (1) according to one of the preceding claims, **characterized in that** the adhesive element (9) has a plurality of separate through-holes (25), in particular with a corner-free contour edge (25a).

14. Motor vehicle (11) with a head-up display (1) according to one of the preceding claims.

## Revendications

1. Affichage tête haute (1) comprenant un dispositif de miroir (5, 6), un miroir (8) et un élément adhésif (9) disposé sur une face arrière (14) du miroir (8), ainsi qu'un support (10) relié à l'élément adhésif (9), le support (10) présentant une face avant (15) tournée vers l'élément adhésif (9), dans laquelle sont disposées des ouvertures de canaux d'évacuation d'air (18), lesdits canaux d'évacuation d'air (18) étant formés dans le support (10), **caractérisé en ce que** l'élément adhésif (9) présente au moins un trou traversant (25) par lequel une zone d'interface entre la face arrière (14) du miroir (8) et une face avant (17) de l'élément adhésif (9) est reliée de manière fluidique à un canal d'évacuation d'air (18).

2. Affichage tête haute (1) selon la revendication 1, **caractérisé en ce que** l'élément adhésif (9) est un ruban adhésif double face.

3. Affichage tête haute (1) selon la revendication 1 ou 2, **caractérisé en ce qu'**au moins un canal d'évacuation d'air (18) est ouvert sur au moins 50%, notamment au moins 75%, notamment au moins 90%, de sa longueur sur la face avant (15) du support (10).

4. Affichage tête haute (1) selon la revendication 3, **caractérisé en ce que** ledit au moins un canal d'évacuation d'air (18) est réalisé sous forme de rainure ouverte sur toute sa longueur sur la face avant (15) du support (10).

5. Affichage tête haute (1) selon l'une des revendications précédentes, **caractérisé en ce qu'**au moins deux canaux d'évacuation d'air (18) sont orientés parallèlement l'un à l'autre.

6. Affichage tête haute (1) selon l'une des revendications précédentes, **caractérisé en ce qu'**au moins deux canaux d'évacuation d'air (18) sont formés en s'étendant dans la direction transversale (x) du support (10) et au moins deux canaux d'évacuation d'air (18) sont disposés en s'étendant dans la direction verticale (y) du support (10).

7. Affichage tête haute (1) selon l'une des revendications précédentes, **caractérisé en ce qu'**au moins un premier canal d'évacuation d'air (18) et au moins un second canal d'évacuation d'air (18) se croisent au niveau d'une intersection de canaux (23) et sont couplés de manière fluidique.

8. Affichage tête haute (1) selon la revendication 7, **caractérisé en ce que** le trou traversant (25) est disposé dans la zone de l'intersection de canaux (23), de sorte que l'intersection de canaux (23) est dégagée en direction de la face arrière (14) du miroir (8).

9. Affichage tête haute (1) selon l'une des revendications précédentes, **caractérisé en ce que** plusieurs canaux d'évacuation d'air (18) sont disposés selon un motif d'agencement de canaux de type matriciel.

10. Affichage tête haute (1) selon l'une des revendications précédentes, **caractérisé en ce qu'**une sortie (24) d'un canal d'évacuation d'air (18), formée à une extrémité dudit canal d'évacuation d'air (18), est formée sur un bord (19, 20, 21, 22) du support (10), de sorte que l'air évacué (L) sort latéralement du support (10) par rapport à la face avant (15) du support (10).

11. Affichage tête haute (1) selon l'une des revendications précédentes, **caractérisé en ce que** la surface de l'élément adhésif (9) représente au moins 70%, notamment au moins 80%, de la surface de la face avant (15), et notamment la recouvre.

12. Affichage tête haute (1) selon la revendication 11, **caractérisé en ce qu'**une bande de bord (26) de la face avant (15) du support (10) n'est pas recouverte par l'élément adhésif (9) et qu'au moins un canal d'évacuation d'air (18) est ouvert sur la face avant (15) dans ladite bande de bord (26).

13. Affichage tête haute (1) selon l'une des revendications précédentes, **caractérisé en ce que** l'élément adhésif (9) présente plusieurs trous traversants séparés (25), notamment avec un bord de contour sans angles (25a).

14. Véhicule automobile (11) équipé d'un affichage tête haute (1) selon l'une des revendications précédentes.
